# EUROPÄISCHE PATENTANMELDUNG

(11) **EP 4 765 522 A1**
(43) Veröffentlichungstag der Anmeldung: **24.06.2026**
(21) Anmeldenummer: 24221588.7
(22) Anmeldetag: 19.12.2024
(51) Int. Cl.: H01S 3/00, H01S 3/083, H01S 3/067

(54) **VERFAHREN UND STRAHLUNGSQUELLE ZUM ERZEUGEN EINER ELEKTROMAGNETISCHEN NUTZSTRAHLUNG MIT EINER ABSTIMMBAREN NUTZFREQUENZ**

(71) Anmelder: Fraunhofer-Gesellschaft zur Förderung der angewandten Forschung e.V., 80686 München (DE); Albert-Ludwigs-Universität Freiburg, 79098 Freiburg (DE)
(72) Erfinder: BREUNIG, Ingo, 79098 Freiburg (DE); VOSSGRAH, Leonard, 79098 Freiburg (DE)
(74) Vertreter: WSL Patentanwälte Partnerschaft mbB

(57) **Zusammenfassung**

Die vorliegende Erfindung betrifft ein Verfahren sowie eine Strahlungsquelle zum Erzeugen einer elektromagnetischen Nutzstrahlung mit einer abstimmbaren Nutzfrequenz. Dabei umfasst das Verfahren die Schritte: Erzeugen einer elektromagnetischen Seed-Strahlung mit einer Seed-Frequenz mit einem Laser, Einkoppeln der Seed-Strahlung in einen optischen Ring, Modulieren der Seed-Strahlung in dem optischen Ring mit einer Modulationsfrequenz, sodass der Seed-Strahlung eine Mehrzahl von Seitenbändern aufgeprägt wird, wobei ein Frequenzabstand jedes aus der Mehrzahl von Seitenbändern von der Seed-Frequenz gleich einem ganzzahligen Vielfachen der Modulationsfrequenz ist, Verstärken der Mehrzahl von Seitenbändern in dem optischen Ring, Filtern der Mehrzahl von Seitenbändern mit einem Bandpass, sodass genau ein Seitenband, dessen Frequenzabstand von der Seed-Frequenz gleich dem Produkt aus einer ganzen Zahl größer als 1 mit der Modulationsfrequenz ist, als die elektromagnetische Nutzstrahlung bereitgestellt wird, und Auskoppeln der Nutzstrahlung aus dem optischen Ring.

## Beschreibung

Die vorliegende Erfindung betrifft ein Verfahren sowie eine Strahlungsquelle zum Erzeugen einer elektromagnetischen Nutzstrahlung mit einer abstimmbaren Nutzfrequenz.

In einer Vielzahl von Anwendungen, insbesondere aber in der digitalen Holographie, ist es notwendig, die Nutzfrequenz von Laserstrahlung sehr schnell abzustimmen bzw. zu variieren. Dabei ist es erforderlich, den Betrag der jeweiligen Frequenzänderung möglichst genau zu kennen und gegebenenfalls die Abstimmbandbreite möglichst groß zu gestalten.

Aus dem Stand der Technik sind eine Reihe von Ansätzen für solche Verfahren und Quellen bekannt, die jedoch alle mit Nachteilen einhergehen.

So sind beispielsweise Anordnungen mit einer Mehrzahl von freilaufenden Lasern bekannt, wobei für die angestrebte Frequenzänderung der Nutzstrahlung zwischen diesen Lasern umgeschaltet wird. Allerdings ist die Frequenz der einzelnen Laser nicht konstant, sodass der Betrag der Frequenzänderung ebenfalls nicht konstant ist und daher in jedem Fall gemessen werden muss. Darüber hinaus führt das Umschalten zwischen einer Mehrzahl von freilaufenden Lasern auch dazu, dass die Frequenzänderungen nur in feststehenden, diskreten Schritten möglich sind.

Ferner sind aus dem Stand der Technik in ihrer Nutzfrequenz abstimmbare Laserquellen in einer Vielzahl von Varianten bekannt. Die Änderung der Nutzfrequenz muss jedoch gemessen werden, um die Nutzfrequenz und deren Änderung bei der weiteren Nutzung der Nutzstrahlung als bekannt voraussetzen zu können.

Darüber hinaus ist es bekannt, Laserstrahlung eine Seitenbandmodulation aufzuprägen, bei welcher der Abstand des erzeugten Seitenbands von der Modulationsfrequenz abhängt und durch Ändern der Modulationsfrequenz ebenfalls einstellbar ist. Allerdings erfordern die aus dem Stand der Technik bekannten, auf einer Seitenbandmodulation beruhenden Strahlungsquellen, eine Änderung der Modulationsfrequenz um den gleichen Betrag, um den das Seitenband seinen Nutzfrequenz ändern muss. Mit anderen Worten ausgedrückt erfordert jede Änderung der Nutzfrequenz der Strahlungsquelle notwendigerweise die gleiche Änderung der Modulationsfrequenz des Modulators.

Demgegenüber ist es Aufgabe der vorliegenden Erfindung, ein Verfahren und eine Strahlungsquelle zum Erzeugen elektromagnetischer Nutzstrahlung mit einer abstimmbaren Nutzfrequenz bereitzustellen, welche die zuvor genannten Nachteile vermeiden.

Die zuvor genannte Aufgabe wird durch ein Verfahren gemäß dem unabhängigen Anspruch 1 gelöst. Dazu umfasst das Verfahren zum Erzeugen einer elektromagnetischen Nutzstrahlung mit einer abstimmbaren Nutzfrequenz erfindungsgemäß die Schritte: Erzeugen einer elektromagnetischen Seed-Strahlung mit einer Seed-Frequenz mit einem Laser; Einkoppeln der Seed-Strahlung in einen optischen Ring; Modulieren der Seed-Strahlung in dem optischen Ring mit einer Modulationsfrequenz, sodass der Seed-Strahlung eine Mehrzahl von Seitenbändern aufgeprägt wird, wobei ein Frequenzabstand jedes aus der Mehrzahl von Seitenbänder von der Seed-Frequenz gleich einem ganzzahligen Vielfachen der Modulationsfrequenz ist; Verstärken der Mehrzahl von Seitenbändern in dem optischen Ring; und Filtern der Mehrzahl von Seitenbändern mit einem Bandpass, sodass genau ein Seitenband, dessen Frequenzabstand von der Seed-Frequenz gleich dem Produkt aus einer ganzen Zahl größer als eins mit der Modulationsfrequenz ist, als die elektromagnetische Nutzstrahlung bereitgestellt wird, und Auskoppeln der Nutzstrahlung aus dem optischen Ring.

Es ist die der vorliegenden Erfindung zugrunde liegende Idee, einen Modulator in einen optischen Ring zu integrieren. Auf diese Weise wird in dem Ring ein Frequenzkamm mit einer Mehrzahl von diskreten, äquidistanten Seitenbändern der Seed-Frequenz generiert, wobei der Abstand **Δν** benachbarter Seitenbänder voneinander und der Abstand des ersten Seitenbands von der Seed-Frequenz gleich der Modulationsfrequenz ***fₘ*** ist. Um eine hinreichende optische Leistung in den Seitenbändern zu generieren, ist zudem ein optischer Verstärker in dem Ring angeordnet. Durch Filtern der Mehrzahl von Seitenbändern mit einem Bandpass wird genau ein Seitenband als Nutzstrahlung herausgegriffen, wobei der Frequenzabstand des von dem Bandpass herausgegriffenen Seitenbands von der Seed-Frequenz ***N* · Δ*v*** ist, wobei ***N*** eine ganze Zahl größer gleich zwei ist. Auf diese Weise wird eine "Übersetzung" einer Änderung der Modulationsfrequenz ***fₘ*** in die Änderung ***N*** · ***fₘ*** des gewählten Seitenbands bereitgestellt.

Mit anderen Worten ausgedrückt, lässt sich mit einer kleinen Änderung der Modulationsfrequenz ***fₘ*** eine Änderung der Nutzfrequenz ***N*** · ***fₘ*** erzielen.

Daher umfasst das erfindungsgemäße Verfahren gemäß einer Ausführungsform die Schritte: Modulieren der Seed-Strahlung mit einer ersten Modulationsfrequenz, sodass die Nutzstrahlung mit einer ersten Nutzfrequenz bereitgestellt wird; Ändern der Modulationsfrequenz um eine Modulationsfrequenzänderung, sodass die Seed-Strahlung mit einer zweiten Modulationsfrequenz moduliert wird und die Nutzstrahlung mit einer zweiten Nutzfrequenz bereitgestellt wird; wobei der Betrag einer Differenz zwischen der ersten Nutzfrequenz und der zweiten Nutzfrequenz ein ganzzahliges Vielfaches der Modulationsfrequenzänderung ist, wobei die ganze Zahl größer als 1 ist.

Der Betrag der Frequenzänderung ***N*** · ***fₘ*** der Nutzfrequenz ist ein durch die Ordnung des als Nutzstrahlung verwendeten Seitenbands vorgegebenes ganzzahliges Vielfaches der Modulationsfrequenz. Daher muss die Frequenzänderung der Nutzfrequenz nicht gesondert gemessen werden.

Die notwendige Bandbreite der RF-Komponenten, insbesondere der RF-Spannungsquelle zum Treiben des Modulators, ist nur der N-te-Bruchteil der Bandbreite, den die RF-Komponenten für eine herkömmliche Seitenbandmodulation haben müssen, mit der ein einziges Seitenband der gleichen Nutzfrequenz erzeugt wird. Bei Frequenzen in einem Bereich oberhalb von 10 GHz bedeutet diese Reduzierung der Bandbreite der RF-Komponenten auch eine Reduzierung der mit der Realisierung der Strahlungsquelle einhergehenden Kosten.

In einer Ausführungsform der Erfindung ist der Laser ein Halbleiterlaser, insbesondere ein Single-Mode-Halbleiterlaser.

Ein optischer Ring ist eine optische Anordnung, welche die elektromagnetische Strahlung, vorliegend die in den Ring eingekoppelte Seed-Strahlung sowie deren Seitenbänder auf einem Ring führt, wobei immer ein Teil der Strahlung im Ring propagiert und nur ein Teil aus dem Ring ausgekoppelt wird. In einer Ausführungsform ist der optische Ring durch eine Anordnung einer Mehrzahl von Spiegeln oder als eine Wellenleiterstruktur realisiert. In einer Ausführungsform der Erfindung ist der Ring ein Ring aus diskreten Spiegeln (Bulk-Optik). In einer alternativen Ausführungsform ist der optische Ring ein Faserring. In einer Ausführungsform wird ein 2x2-Schmelzkoppler zum Einkoppeln der Seed-Strahlung in den Ring und zum Auskoppeln eines oder mehrerer Seitenbänder aus dem Ring verwendet.

Das Modulieren der Seed-Strahlung in dem optischen Ring erfolgt mit einem Modulator, insbesondere einem Amplitudenmodulator. Modulatoren sind in vielfältigen Ausführungsformen aus dem Stand der Technik bekannt. In einer Ausführungsform der Erfindung ist der Modulator ein elektrooptischer oder ein akustooptischer Modulator.

In einer Ausführungsform der Erfindung ist der Modulator ein optischer Quadratur-Amplituden-Modulator.

In einer Ausführungsform der Erfindung ist der Modulator ein Einseitenbandmodulator. Ein Einseitenbandmodulator erzeugt genau ein Seitenband im Spektrum auf einer Seite der Seed-Frequenz. Derartige Einseitenbandmodulatoren sind in einer Reihe von Ausführungsformen aus dem Stand der Technik bekannt und sind kommerziell erhältlich, beispielsweise als "MXIQER-LN-30" von der Firma exail.

Dabei beruht ein solcher Einseitenbandmodulator in einer Ausführungsform auf einer Aufteilung der zu modulierenden Strahlung auf mindestens zwei Strahlpfade nach Art eines Mach-Zehnder-Interferometers. In jedem Strahlpfad wird der Strahlung eine Amplitudenmodulation aufgeprägt. Durch geeignete Wahl der Weglängendifferenzen zwischen den einzelnen Strahlpfaden sowie den Phasenlagen der Modulationen in den jeweiligen Strahlpfaden lässt sich gezielt ein einzelnes Seitenband erzeugen, wobei nur in diesem einzelnen Seitenband Leistung verbleibt, während es für die übrigen Seitenbänder sowie die Seed-Frequenz zu einer destruktiven Interferenz kommt. In einer Ausführungsform umfasst der Einseitenbandmodulator zwei parallele Mach-Zehnder Anordnungen mit vier Modulationen in den vier Strahlpfaden.

In einer Ausführungsform der Erfindung ist die Modulationsfrequenz ausgewählt aus einem Bereich von 1 GHz bis 150 GHz. Zu diesem Zweck wird typischerweise der Modulator von einer RF-Spannungsquelle getrieben, welche ein Wechselspannungssignal mit der Modulationsfrequenz erzeugt.

Zum Verstärken der Mehrzahl von Seitenbändern in dem optischen Ring ist ein optischer Verstärker vorgesehen. In einer Ausführungsform der Erfindung ist der optische Verstärker ein Faserverstärker, vorzugsweise ein Erbium-dotierter Faserverstärker.

Zum Filtern des genau einen aus der Mehrzahl von Seitenbändern ist ein Bandpassfilter vorgesehen. In einer Ausführungsform der Erfindung ist das Filter ein Fabry-Perot Etalon, ein Bragg-Gitter oder ein Faser-Bragg-Gitter.

In einer Ausführungsform der Erfindung erfolgt das Filtern in einer Strahlrichtung der Mehrzahl von Seitenbändern nach dem Verlassen des optischen Rings. Es sind jedoch Ausführungsformen denkbar, in denen das Filter innerhalb des optischen Rings angeordnet ist. In diesem Sinne kann das Filtern vor oder nach dem Auskoppeln eines oder mehrerer Seitenbänder und somit der Nutzstrahlung aus dem Ring erfolgen.

In einer Ausführungsform der Erfindung wird das Verfahren zum Erzeugen elektromagnetischer Nutzenstrahlung in einem Messverfahren der digitalen Holographie verwendet, wobei die Nutzstrahlung zum Beleuchten eines Prüfobjekts eingesetzt wird.

Die zuvor genannte Aufgabe wird auch durch eine Strahlungsquelle zum Erzeugen einer elektromagnetischen Nutzstrahlung mit einer abstimmbaren Nutzfrequenz gemäß dem unabhängigen Anspruch 6 gelöst. Dazu weist die Strahlungsquelle erfindungsgemäß auf: einen Laser, wobei der Laser derart eingerichtet ist, dass der Laser in dem Betrieb der Strahlungsquelle eine elektromagnetische Seed-Strahlung mit einer Seed-Frequenz erzeugt und abstrahlt; einen optischen Ring, wobei der Laser und der optische Ring der angeordnet sind, dass in dem Betrieb der Strahlungsquelle die Seed-Strahlung in den optischen Ring eingekoppelt wird; und einen in dem optischen Ring angeordneten Modulator, wobei der Modulator derart eingerichtet ist, dass der Modulator in dem Betrieb der Strahlungsquelle die Seed-Strahlung mit einer Modulationsfrequenz moduliert, sodass der Seed-Strahlung eine Mehrzahl von Seitenbändern aufgeprägt wird, wobei ein Frequenzabstand jedes aus der Mehrzahl von Seitenbändern von der Seed-Frequenz gleich einem ganzzahligen Vielfachen der Modulationsfrequenz ist, und wobei der optische Ring derart ausgestaltet ist, dass zumindest eines aus der Mehrzahl von Seitenbändern aus dem optischen Ring ausgekoppelt wird; einen in dem optischen Ring angeordneten Verstärker, wobei der Verstärker derart ausgestaltet ist, dass der Verstärker in dem Betrieb der Strahlungsquelle die Mehrzahl von Seitenbändern verstärkt; und ein optisches Bandpassfilter, wobei das Bandpassfilter derart ausgestaltet und angeordnet ist, dass das Bandpassfilter in dem Betrieb der Strahlungsquelle die Mehrzahl von Seitenbändern filtert, sodass genau ein Seitenband, dessen Frequenzabstand von der Seed-Frequenz gleich dem Produkt aus einer ganzen Zahl größer als 1 mit der Modulationsfrequenz ist, als die elektromagnetische Nutzstrahlung in einem Ausgang der Strahlungsquelle bereitgestellt wird.

Soweit im folgenden Aspekte der Erfindung im Hinblick auf die Strahlungsquelle beschrieben werden, so gelten diese auch für das entsprechende Verfahren zum Erzeugen der elektromagnetischen Nutzstrahlung und umgekehrt. Soweit das Verfahren mit einer Strahlungsquelle gemäß dieser Erfindung ausgeführt wird, so weist diese die entsprechenden Einrichtungen hierfür auf. Insbesondere sind Ausführungsformen der Strahlungsquelle zum Ausführen zuvor beschriebener Ausführungsformen des Verfahrens geeignet.

In einer Ausführungsform weist die Strahlungsquelle eine Steuereinrichtung auf, wobei die Steuereinrichtung derart wirksam mit dem Modulator verbunden ist, dass der Modulator in dem Betrieb der Strahlungsquelle ein Steuersignal von der Steuereinrichtung empfängt, wobei die Steuereinrichtung derart eingerichtet ist, dass sie in dem Betrieb der Strahlungsquelle das Steuersignal derart erzeugt, dass die Seed-Strahlung mit einer ersten Modulationsfrequenz moduliert wird, so dass die Nutzstrahlung mit einer ersten Nutzfrequenz bereitgestellt wird, die Modulationsfrequenz um eine Modulationsfrequenzänderung geändert wird, so dass die Seed-Strahlung mit einer zweiten Modulationsfrequenz moduliert wird und die Nutzstrahlung mit einer zweiten Nutzfrequenz bereitgestellt wird, wobei der Betrag einer Differenz zwischen der ersten Nutzfrequenz und der zweiten Nutzfrequenz ein ganzzahliges Vielfaches der Modulationsfrequenzänderung ist, wobei die ganze Zahl größer als 1 ist.

In einer Ausführungsform der Erfindung ist in dem optischen Ring ein zusätzliches Bandpassfilter angeordnet, dass eine Mehrzahl von Seitenbändern durchlässt, aber die Anzahl der Seitenbändern begrenzt. Ein solches zusätzliches Bandpassfilter reduziert oder eliminiert ein sogenanntes out-of-Band-Rauschen der Nutzstrahlung.

In einer Ausführungsform der Erfindung ist das Bandpassfilter ein einstellbares Filter. Auf diese Weise lässt sich die Ordnung desjenigen Seitenbands, dass als Nutzstrahlung an dem Ausgang des optischen Rings bereitgestellt wird durch Einstellen des Filters auswählen. In einer dazu alternativen Ausführungsform umfasst die Strahlungsquelle eine Mehrzahl von Bandpassfiltern, die wahlweise zum Filtern des genau einen Seitenbands aus der Mehrzahl von Seitenbändern genutzt wird. Durch Auswählen eines Bandpassfilters aus der Mehrzahl von Bandpassfiltern kann auf diese Weise ebenfalls die Ordnung des als Nutzstrahlung bereitgestellten Seitenbands gewählt werden.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit identischen Bezugszeichen bezeichnet.
- Figur 1: ist eine schematische Draufsicht auf eine Ausführungsform der erfindungsgemäßen Strahlungsquelle.
- Figur 2 a): ist eine schematische Darstellung eines mit der Strahlungsquelle aus Figur 1 bei einer ersten Modulationsfrequenz erzeugten Frequenzkamms.

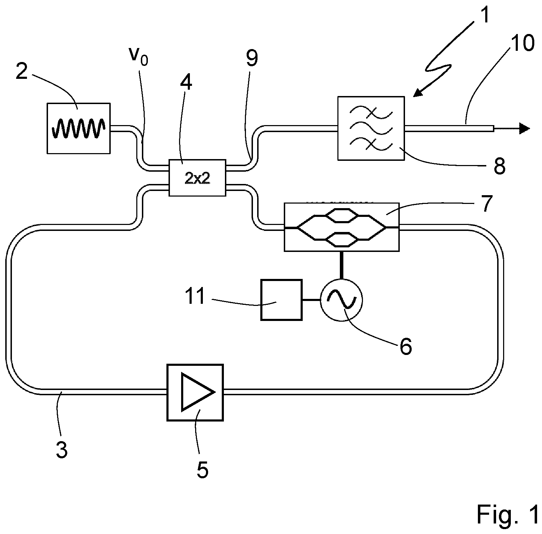

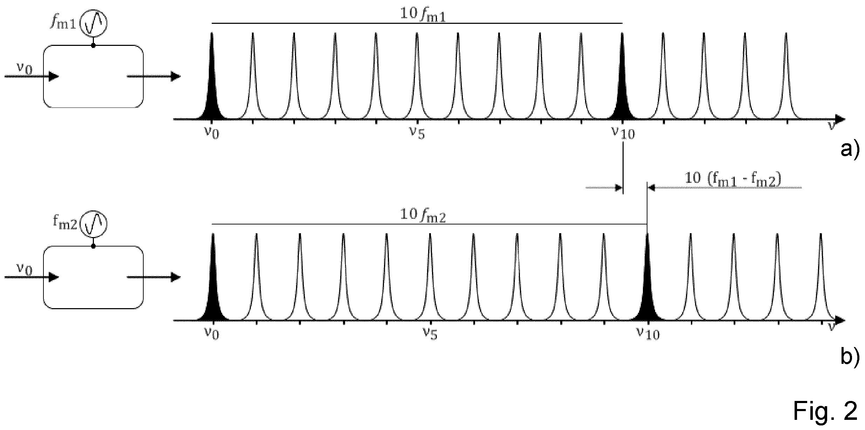

- Figur 2 b): ist eine schematische Darstellung eines mit der Strahlungsquelle aus Figur 1 bei einer zweiten Modulationsfrequenz erzeugten Frequenzkamms.

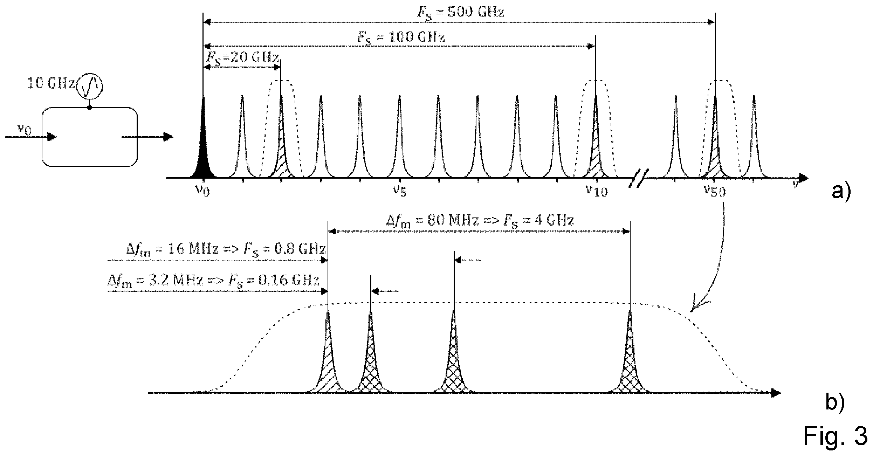

- Figur 3 a): ist eine schematische Darstellung eines weiteren mit der Strahlungsquelle aus Figur 1 erzeugten Frequenzkamms.
- Figur 3 b): ist eine schematische Darstellung der Verschiebung einer Ordnung des Frequenzkamms aus Figur 3 a) bei Änderung der Modulationsfrequenz.
Die erfindungsgemäße Strahlungsquelle 1 besteht in der in Figur 1 schematisch dargestellten Ausführungsform aus einem Single-Mode-Halbleiterlaser 2, einem Faserring 3 als eine Implementierung des optischen Rings 3, einem 2x2-Faserschmelzkoppler 4 zum Ein- und Auskoppeln von elektromagnetischer Strahlung in den und aus dem Faserring 3, einem Faserverstärker 5 in dem Faserring 3, einem von einer RF-Spannungsquelle 6 getriebenen optischen Modulator 7 in dem Faserring 3, einer Steuerung 11 und einem optischen Bandpassfilter in einem Ausgang 9 des Faserrings 3.

In der dargestellten Ausführungsform ist der Laser der Strahlungsquelle 1 ein Single-Mode-Halbleiterlaser 2, welcher elektromagnetische Seed-Strahlung bei einer Seed-Frequenz *v*₀ generiert und abstrahlt. Der Laser 2 ist fasergekoppelt, sodass sein Ausgang vollständig in eine optische Singlemodefaser eingekoppelt wird. Über den 2x2-Schmelzkoppler 4 wird die Seed-Strahlung in den Faserring 3 eingestrahlt.

In dem Faserring 3 wird der Seed-Strahlung mittels des Modulators 7 eine Mehrzahl von Seitenbändern aufgeprägt. Dabei wird der Modulator 7 von der RF-Spannungsquelle 6 mit einer Modulationsfrequenz ***fₘ*** getrieben. Bei dem Modulator 7 handelt es sich um einen elektrooptischen Einseitenband-Modulator, welcher der Seed-Strahlung beim erstmaligen Durchgang durch den Modulator 7 ein erstes Seitenband mit einer ersten Seitenbandfrequenz ***v*₁** mit einem Frequenzabstand von der Seed-Frequenz ***v*₀** erzeugt. Dieser Frequenzabstand ist gleich der Modulationsfrequenz **fₘ**. Diesem ersten Seitenband wird dann, wenn die Strahlung des ersten Seitenbands selbst den Modulator 7 durchläuft, ebenfalls auf einer Seite ein Seitenband aufgeprägt. Dieses Seitenband hat dann einen Frequenzabstand von der Seed-Frequenz von 2**fₘ**, d. h. dem Doppelten der Modulationsfrequenz **fₘ**.

Auf diese Weise entsteht ein ganzer Frequenzkamm mit einer Mehrzahl von Ordnungen von Seitenbändern. Dabei wird aus Gründen der Energieerhaltung die meiste optische Leistung aus der Seed-Strahlung in die generierten Seitenbänder verschoben. Die Leistung der Seed-Strahlung teilt sich aber auf die Mehrzahl von Seitenbändern auf. Um dennoch eine ausreichende Leistung für die Nutzstrahlung zur Verfügung stellen zu können, werden die Seitenbänder in dem Faserverstärker 5 innerhalb des Faserrings 3 verstärkt.

An dem Schmelzkoppler 4 wird bei jedem Umlauf der elektromagnetischen Strahlung in dem Faserring 3 auch Leistung in den Ausgang 9 des Faserrings 3 ausgekoppelt. Das dort angeordnete optische Bandpassfilter 8 dient dazu, aus dem im Ausgang 9 vorhandenen Frequenzkamm genau ein Seitenband in Transmission herauszufiltern. Dieses Seitenband bildet dann in dem Ausgang 10 der Strahlungsquelle 1 die Nutzstrahlung.

Die Nutzstrahlung hat eine Nutzfrequenz mit einem Frequenzabstand von der Seed-Frequenz, der ein ganzzahliges Vielfaches der Modulationsfrequenz ist, d.h. ***N*** · ***fₘ.*** Dazu lässt das Bandpassfilter 8 genau ein Seitenband durch, wobei dieses Seitenband einen Frequenzabstand des N-fachen der Modulationsfrequenz ***fₘ*** von der Seed-Frequenz hat, wobei die ganze Zahl ***N*** größer als 1 (d.h. mindestens 2) ist.

Die Figuren 2 a) und b) erläuterten nun die Funktionsweise der Strahlungsquelle 1 aus Figur 1. Auf der linken Seite der Figuren a) und b) ist schematisch die Seitenbandmodulation in dem Faserring 3 gezeigt. In der Darstellung aus Figur 2 a) wird davon ausgegangen, dass die Seed-Strahlung in dem Faserring 3 mit einer ersten Modulationsfrequenz ***f***_{**m**1} moduliert wird.

Auf diese Weise wird ein Frequenzkamm mit einer Vielzahl von Frequenzen erzeugt, so wie es auf der rechten Seite der Figur 2 a) in einem Frequenzdiagramm dargestellt ist. Aufgetragen ist die Intensität gegenüber der Frequenz ***v.*** Die Seed-Frequenz ist als ***v*₀** bezeichnet. In der Ausführungsform wird davon ausgegangen, dass nur die zehnte Seitenbandfrequenz ***v*₁₀** das Bandpassfilter8 passiert, sodass die zehnte Seitenbandfrequenz ***v*₁₀** die Nutzfrequenz ist. Alle Seitenbänder sind äquidistant zueinander und um die Modulationsfrequenz ***f***_{**m**1} vom unmittelbar benachbarten Seitenband beabstandet. Auch das erste Seitenband ***v*₁** weist von der Seed-Frequenz ***v*₀** eine Frequenzabstand auf, der gleich der Modulationsfrequenz ***f*_{*m*1}** ist.

Ändert man nun die Modulationsfrequenz von ***f*ₘ₁** zu ***f*_{*m*2}**, wobei ***f*_{*m*2}** = ***f*_{*m*1}** + **X** so ändert sich der Frequenzabstand zwischen jeweils zwei Seitenbändern um die Differenz **X** zwischen der ersten Modulationsfrequenz ***f*ₘ₁** und der zweiten Modulationsfrequenz ***f*_{*m*2}**. Aufgrund der Tatsache, dass die Nutzfrequenz gleich der Frequenz des zehnten Seitenbandes ***v*₁₀** ist, führt die Änderung der Modulationsfrequenz von der ersten Modulationsfrequenz zu der zweiten Modulationsfrequenz zu einer Frequenzänderung des zehnten Seitenbands ***v*₁₀** von 10 · **X.** Die Änderung der Modulationsfrequenz wird also mit einem Faktor 10 in eine Frequenzänderung des zehnten Seitenbandes übersetzt.

Figur 3 verdeutlicht nun wie sich mit dem erfindungsgemäßen Prinzip große Abstimmbandbreiten erzielen lassen. Das Beispiel aus Figur 3 geht dabei von einer Modulationsfrequenz ***fₘ*** von 10 GHz aus. Daher sind alle Seitenbänder äquidistant um 10 GHz vom jeweils benachbarten Seitenband beanstandet. Betrachtet man beispielsweise das 50. Seitenband ***v***₅₀, so hat dieses eine Seitenbandfrequenz mit einem Frequenzabstand von 500 GHz von der Seed-Frequenz ***v*₀**. Mit einer Änderung der Modulationsfrequenz ***fₘ*** um eine vergleichsweise geringe Modulationsfrequenzänderung ***Δfₘ*** in einem Bereich von wenigen Megahertz lässt sich eine Frequenzänderung des 50. Seitenbands im GHz-Bereich erzielen. So führt eine Änderung der Modulationsfrequenz **Δ*fₘ*** von 3,2 MHz zu einer Frequenzänderung ***F_{S}*** des 50. Seitenband von 0,16 GHz. Eine Änderung der Modulationsfrequenz **Δ*fₘ*** von 16 MHz führt zu einer Frequenzänderung ***F_{S}*** des 50. Seitenband von 0,8 GHz. Eine Änderung der Modulationsfrequenz **Δ*fₘ*** von 80 MHz führt zu einer Frequenzänderung ***F_{S}*** des 50. Seitenband von 4 GHz.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, so erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Strahlungsquelle
- 2: Single-Mode-Halbleiterlaser
- 3: Faserring
- 4: 2x2-Faserschmelzkoppler
- 5: Faserverstärker
- 6: Spannungsquelle
- 7: Modulator
- 8: Optisches Bandpassfilter
- 9: Ausgang des Faserrings 3
- 10: Ausgang der Strahlungsquelle 1
- 11: Steuerung

- ***v*₀**: Seed-Frequenz
- ***v*₁**: erste Seitenbandfrequenz
- ***v_{N}***: N-te Seitenbandfrequenz
- ***fₘ***: Modulationsfrequenz
- ***F_{S}***: Frequenzänderung des Seitenbandes

## Patentansprüche

1. Verfahren zum Erzeugen einer elektromagnetischen Nutzstrahlung mit einer abstimmbaren Nutzfrequenz mit den Schritten,
Erzeugen einer elektromagnetischen Seed-Strahlung mit einer Seed-Frequenz mit einem Laser (2),
Einkoppeln der Seed-Strahlung in einen optischen Ring (3),
Modulieren der Seed-Strahlung in dem optischen Ring (3) mit einer Modulationsfrequenz (***fₘ***), sodass der Seed-Strahlung eine Mehrzahl von Seitenbändern (***v_{N}***) aufgeprägt wird, wobei ein Frequenzabstand jedes aus der Mehrzahl von Seitenbändern (***v_{N}***) von der Seed-Frequenz (***v*₀**) gleich einem ganzzahligen Vielfachen der Modulationsfrequenz (***fₘ***) ist,
Verstärken der Mehrzahl von Seitenbändern in dem optischen Ring (3),
Filtern der Mehrzahl von Seitenbändern mit einem Bandpass (8), sodass genau ein Seitenband, dessen Frequenzabstand von der Seed-Frequenz gleich dem Produkt aus einer ganzen Zahl größer als 1 mit der Modulationsfrequenz (***fₘ***) ist, als die elektromagnetische Nutzstrahlung bereitgestellt wird, und Auskoppeln der Nutzstrahlung aus dem optischen Ring (3).

2. Verfahren nach dem vorhergehenden Anspruch, wobei das Verfahren die Schritte aufweist
Modulieren der Seed-Strahlung mit einer ersten Modulationsfrequenz, sodass die Nutzstrahlung mit einer ersten Nutzfrequenz bereitgestellt wird,
Ändern der Modulationsfrequenz um eine Modulationsfrequenzänderung, sodass die Seed-Strahlung mit einer zweiten Modulationsfrequenz moduliert wird und die Nutzstrahlung mit einer zweiten Nutzfrequenz bereitgestellt wird, wobei der Betrag einer Differenz zwischen der ersten Nutzfrequenz und der zweiten Nutzfrequenz ein ganzzahliges Vielfaches der Modulationsfrequenzänderung ist, wobei die ganze Zahl größer als 1 ist.

3. Verfahren nach einem der vorhergehenden Ansprüche, wobei das Filtern in einer Strahlrichtung der Mehrzahl von Seitenbändern nach dem Verlassen des optischen Rings (3) erfolgt.

4. Verfahren nach einem der vorhergehenden Ansprüche, wobei die Modulationsfrequenz (***fₘ***) ausgewählt aus einem Bereich von 1 GHz bis 150 GHz.

5. Verwendung eines Verfahrens nach einem der vorhergehenden Ansprüche in einem Messverfahren der digitalen Holographie, wobei die Nutzstrahlung zum Beleuchten eines Prüfobjekts eingesetzt wird.

6. Strahlungsquelle (1) zum Erzeugen einer elektromagnetischen Nutzstrahlung mit einer abstimmbaren Nutzfrequenz, wobei die Strahlungsquelle (1) aufweist
einen Laser (2),
wobei der Laser (2) derart eingerichtet ist, dass der Laser (2) in dem Betrieb der Strahlungsquelle (1) eine elektromagnetische Seed-Strahlung mit einer Seed-Frequenz (***v*₀**) erzeugt und abstrahlt,
einen optischen Ring (3),
wobei der Laser (2) und der optische Ring (3) derart angeordnet sind, dass in dem Betrieb der Strahlungsquelle (1) die Seed-Strahlung in den optischen Ring (3) eingekoppelt wird, und
einen in dem optischen Ring (3) angeordneten Modulator (7),
wobei der Modulator (7) derart eingerichtet ist, dass der Modulator (7) in dem Betrieb der Strahlungsquelle (1) die Seed-Strahlung mit einer Modulationsfrequenz (***fₘ***) moduliert, so dass der Seed-Strahlung eine Mehrzahl von Seitenbändern aufgeprägt wird, wobei ein Frequenzabstand jedes aus der Mehrzahl von Seitenbändern von der Seed-Frequenz (***v*₀**) gleich einem ganzzahligen Vielfachen der Modulationsfrequenz (***fₘ***) ist, und
wobei der optische Ring (3) derart ausgestaltet ist, dass zumindest eines aus der Mehrzahl von Seitenbändern aus dem optischen Ring (3) ausgekoppelt wird,
einen in dem optischen Ring (3) angeordneten Verstärker (5),
wobei der Verstärker (5) derart ausgestaltet ist, dass der Verstärker (5) in dem Betrieb des Strahlungsquelle (1) die Mehrzahl von Seitenbändern verstärkt, und
ein optisches Bandpassfilter (8),
wobei das Bandpassfilter (8) derart ausgestaltet und angeordnet ist, dass das Bandpassfilter (8) in dem Betrieb der Strahlungsquelle (1) die Mehrzahl von Seitenbändern filtert, sodass genau ein Seitenband, dessen Frequenzabstand von der Seed-Frequenz gleich dem Produkt aus einer ganzen Zahl größer als 1 mit der Modulationsfrequenz ist, als die elektromagnetische Nutzstrahlung in einem Ausgang (10) der Strahlungsquelle (1) bereitgestellt wird.

7. Strahlungsquelle (1) nach dem vorhergehenden Anspruch, wobei die Strahlungsquelle eine Steuereinrichtung (11) aufweist,
wobei die Steuereinrichtung (11) derart wirksam mit dem Modulator (7) verbunden ist, dass der Modulator (7) in dem Betrieb der Strahlungsquelle (1) ein Steuersignal von der Steuereinrichtung (11) empfängt,
wobei die Steuereinrichtung (11) derart eingerichtet ist, dass sie in dem Betrieb der Strahlungsquelle (1) das Steuersignal derart erzeugt, dass
die Seed-Strahlung mit einer ersten Modulationsfrequenz moduliert wird, sodass die Nutzstrahlung mit einer ersten Nutzfrequenz bereitgestellt wird,
die Modulationsfrequenz um eine Modulationsfrequenzänderung geändert wird, sodass die Seed-Strahlung mit einer zweiten Modulationsfrequenz moduliert wird und die Nutzstrahlung mit einer zweiten Nutzfrequenz bereitgestellt wird,
wobei der Betrag einer Differenz zwischen der ersten Nutzfrequenz und der zweiten Nutzfrequenz ein ganzzahliges Vielfaches der Modulationsfrequenzänderung ist, wobei die ganze Zahl größer als 1 ist.

8. Strahlungsquelle (1) nach Anspruch 6 oder 7, wobei der Modulator ein Seitenbandmodulator, vorzugsweise ein Einzel-Seitenband-Modulator (7) ist.

9. Strahlungsquelle (1) nach einem der Ansprüche 6 bis 8, wobei, wobei der Modulator (7) ein optischer Quadratur-Amplituden-Modulator ist.

10. Strahlungsquelle (1) nach einem der Ansprüche 6 bis 9, wobei in dem optischen Ring (3) ein zusätzliches Bandpassfilter angeordnet ist, das eine Mehrzahl von Seitenbändern durchlässt, aber die Anzahl der Seitenbänder begrenzt.

11. Strahlungsquelle (1) nach einem der Ansprüche 6 bis 10, wobei der optische Ring (3) ein Faserring ist.

12. Strahlungsquelle (1) nach einem der Ansprüche 6 bis 11, wobei der optische Verstärker ein Faserverstärker ist (5).
